# FASCICULE DE BREVET EUROPEEN

(11) **EP 4 552 938 B1**
(45) Date de publication et mention de la délivrance du brevet: **04.03.2026**
(21) Numéro de dépôt: 24205570.5
(22) Date de dépôt: 09.10.2024
(51) Int. Cl.: B60W 30/14, B60W 30/18

(54) **PROCÉDÉ ET DISPOSITIF DE CONTRÔLE D'UNE RÉGULATION DE VITESSE D'UN VÉHICULE AUTONOME**
VERFAHREN UND VORRICHTUNG ZUR STEUERUNG EINER GESCHWINDIGKEITSREGELUNG EINES AUTONOMEN FAHRZEUGS
METHOD AND DEVICE FOR CONTROLLING A SPEED REGULATION OF AN AUTONOMOUS VEHICLE

(30) Priorité: 09.11.2023 FR 2312172
(43) Date de publication de la demande: 14.05.2025
(73) Titulaire: Stellantis Auto SAS, 78300 Poissy (FR)
(72) Inventeur: DESCHENES, OLIVIER, 92240 MALAKOFF (FR); GAUTHIER, PIERRE CLEMENT, 51100 REIMS (FR); REY, ALEXIS, 13090 AIX EN PROVENCE (FR); BRACONNIER, JEAN-BAPTISTE, 91120 PALAISEAU (FR)
(74) Mandataire: ESIP

(56) Documents cités:
- DE-A1- 102018 210 648

## Description

### Domaine technique de l'invention

L'invention est dans le domaine des systèmes d'aide à la conduite de véhicule autonome. En particulier, l'invention concerne un contrôle d'une régulation de vitesse d'un véhicule autonome pour gérer une accélération dudit véhicule arrivant sur un rond-point.

### Etat de la technique

On entend par « véhicule » tout type de véhicule tel qu'un véhicule automobile, un cyclomoteur, une motocyclette, un robot de stockage dans un entrepôt, etc. On entend par « conduite autonome » d'un « véhicule » tout procédé apte à assister la conduite du véhicule, le « véhicule » est alors également nommé « véhicule autonome ». Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

DE 10 2018 210648 A1 divulgue un procédé de contrôle d'une régulation de vitesse d'un véhicule autonome pour gérer une accélération dudit véhicule arrivant sur un rond-point, ledit procédé étant mis en oeuvre par un processeur et comprenant une étape de détermination, à partir de données issues d'une cartographie simple définition et d'un système de géolocalisation, d'une première distance, par rapport audit véhicule, d'un début dudit rond-point, et d'un premier type d'une première signalisation routière.

Parmi les systèmes d'aide à la conduite, sont connus, par exemple, les dispositifs de maintien dans la voie, les dispositifs de changement de voie, les dispositifs de régulation de vitesse adaptative, ...

Un véhicule, comprenant un de ces dispositifs, comprend de nombreux capteurs comme une caméra, un RADAR, un LIDAR, des ultrasons, des accéléromètres, une centrale inertielle, des capteurs de position ou de localisation, des capteurs de vitesse, des capteurs d'accélération, ... Il est connu des traitements d'informations réalisées par au moins un calculateur embarqué dans le véhicule qui rendent apte à percevoir l'environnement. Par environnement, on entend l'extérieur et l'intérieur du véhicule

Cette perception de l'environnement rend apte à identifier, localiser puis reconnaître des signalisations routières, comme un panneau ou un feu de signalisation. En particulier, en présence d'une caméra embarquée et par un traitement d'images adapté, il est connu d'identifier une signalisation routière, comme un panneau ou un feu, de déterminer un type de signalisation, par exemple un type de panneau, comme un panneau STOP, ou un type de feu, comme un feu tricolore de signalisation, et de déterminer une distance qui sépare le véhicule avec la signalisation routière identifiée.

Par ailleurs ce véhicule comprend également un système de navigation qui comprend un moyen pour se localiser et une cartographie. Il existe différents types de cartographie. Une cartographie haute définition, dite cartographie HD, caractérise les voies et des attributs liés à la route comme un nombre de voie, des courbures de la route, une pente de la route, des signalisations routières, ... Par ailleurs, avec une cartographie HD, le système de navigation, qui est connecté avec des serveurs extérieurs au véhicule par des liaisons de télécommunication, met régulièrement à jour la cartographie. Ainsi, les attributs liés à la route sont maintenus à jour. Par ailleurs, dans une cartographie HD, les attributs sont bien positionnés (résolution de 1 mètre).

Un autre type de cartographie est une cartographie SD, simple définition. La caractérisation des voies est nettement moins précise et les attributs ne sont pas toujours bien numérisés (manque ou positionnement moins précise de l'ordre de plusieurs mètres). Dans une cartographie SD, l'ensemble des voies d'une même route, d'un rond-point, ..., est représenté par une ligne. Il n'y pas d'information ou de positionnement sur une distance latérale par rapport à un bord de la route ou par rapport à la position du véhicule. Ainsi, l'emplacement d'un début de rond-point est très imprécis par rapport à la réalité. Une erreur de position d'un début de rond-point est de l'ordre de la moitié de la largeur d'une voie multiplié par le nombre de voies dans le rond-point plus l'erreur de positionnement du début du rond-point dû à la résolution de la cartographie. Par exemple, si on prend le rond-point de la place Charles de Gaulle à Paris (rond-point de l'Arc de Triomphe), l'erreur est de plus d'une dizaine de mètres.

Il a été développé des régulateurs de vitesse, adaptatifs, qui gère l'accélération du véhicule en fonction d'une trajectoire probable du véhicule en utilisant les informations d'une cartographie SD. Parce que le début d'un rond-point d'une cartographie SD se situe généralement plus loin en distance que le début effectif du rond-point, et parce que cet écart de distance n'est pas constant et n'est pas déterminée par la cartographie, la régulation de vitesse est inconfortable et anxiogène. On arrive plus vite sur un rond-point qu'un conducteur normal, et cela nécessite un freinage alors plus fort dans le rond-point pour éviter une trop forte accélération latérale synonyme d'inconfort aussi.

### Résumé de l'invention

Un objet de la présente invention est de remédier au problème précité, en particulier améliorer la précision de localisation d'un début de rond-point et réguler la vitesse du véhicule, appliquer par exemple une décélération, comme le ferait un conducteur.

A cet effet, un premier aspect de l'invention concerne un procédé de contrôle d'une régulation de vitesse d'un véhicule autonome pour gérer une accélération dudit véhicule arrivant sur un rond-point, ledit procédé étant mis en œuvre par un processeur et comprenant les étapes de :
- Détermination, à partir de données issues d'une cartographie simple définition et d'un système de géolocalisation,
   ∘ d'une première distance, par rapport audit véhicule, d'un début dudit rond-point ;
   ∘ d'un premier type d'une première signalisation routière ; et
   ∘ d'une deuxième distance, par rapport audit véhicule, de ladite première signalisation routière lorsque ledit premier type est relatif à une intersection ou à une route prioritaire ;
- Détermination d'une nouvelle distance de début dudit rond-point fondée sur ladite première distance, sur ledit premier type et sur ladite deuxième distance ;
- Régulation de la vitesse du véhicule à partir de ladite nouvelle distance de début de rond-point.

Ainsi, la distance entre le véhicule et le début du rond-point est calculée de manière différente. La prise en compte de la position d'une signalisation routière indiquant une intersection ou une route prioritaire ainsi que du type de la signalisation routière permet de rendre plus prédictible la distance réelle du début du rond-point par rapport au véhicule. On n'est plus soumis à la variation due à une taille, nombre de voies, du rond-point.

Avantageusement, le procédé comporte en outre les étapes de :
- Détermination, à partir de données issues d'une caméra embarquée sur ledit véhicule,
   ∘ d'un deuxième type d'une deuxième signalisation routière ; et
   ∘ d'une troisième distance, par rapport audit véhicule, de ladite deuxième signalisation routière lorsque ledit deuxième type est relatif à une intersection ou à une route prioritaire ;
et dans lequel la détermination de ladite nouvelle distance de début dudit rond-point est, en outre, fondée sur ledit deuxième type et sur ladite troisième distance.

Ainsi, tout d'abord, en comparant le premier type au deuxième type, et en comparant la deuxième distance et la troisième distance, on identifie que la deuxième signalisation routière est la même que la première signalisation routière. Cela permet de fiabiliser la détermination de la distance entre le véhicule et la signalisation routière en réduisant les incertitudes de positionnement, par rapport au réel, des objets (type de route, signalisation routière, ...) issus de la cartographie simple définition. Par ces croisements d'informations, l'environnement est alors mieux représenté. La détermination du début du rond-point (la nouvelle distance) est alors plus répétitive, plus précise et plus proche de la réalité. De cette manière, on réduit les incertitudes de positionnement liées à la cartographie simple définition. Ceci permet une meilleure régulation de vitesse et de gestion de l'accélération du véhicule avant d'entrer dans un rond-point. Le profil de vitesse du véhicule avant d'entrer dans un rond-point est plus proche de ce que fait un conducteur.

Avantageusement, une signalisation routière dont le type est relatif à une intersection ou route prioritaire est un panneau stop, un panneau cédez le passage, ou un autre panneau d'intersection ou de priorité, ou dans lequel une signalisation routière dont le type est relatif à une intersection ou route prioritaire est un feu tricolore ou un autre feu d'intersection.

Avantageusement, un panneau d'intersection ou de priorité est également un panneau de signalisation de position.

Ainsi, on ne prend pas en compte les panneaux de signalisation, dite avancée, qui signalent en avance, a plus de 50 mètres par exemple, l'entré d'un rond-point. Un panneau de signalisation de position est un panneau qui est placé à environ une dizaine de centimètres avant le début effectif de ce qui doit être signalé. C'est un panneau qui indique la position. Un panneau de signalisation avancée est souvent complété d'un panonceau indiquant par écrit une distance avant le début, par exemple « 150 m ». Cependant, l'emplacement réel du panneau de signalisation avancée par rapport à la distance annoncée est de l'ordre de 50 m. Il ne faut pas prendre en compte la distance annoncée pour déterminer la nouvelle distance sinon la nouvelle distance sera alors moins précise.

Un deuxième aspect de l'invention concerne un dispositif comprenant une cartographie simple définition, un système de géolocalisation, une caméra embarquée une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions qui, lorsque le programme est exécuté par le dispositif selon le deuxième aspect de l'invention, conduisent celui-ci à mettre en œuvre le procédé selon le premier aspect de l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un véhicule arrivant sur un rond-point selon une vue réelle.
[Fig. 3] illustre schématiquement un véhicule arrivant sur un rond-point selon les données issues d'une cartographie simple définition et d'un système de géolocalisation.
[Fig. 4] illustre schématiquement un procédé de contrôle d'une régulation de vitesse d'un véhicule autonome, selon un exemple particulier de réalisation de la présente invention.

### Description détaillée de l'invention

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

On entend par « plan horizontal » un plan sensiblement parallèle au plan horizontal d'une route à l'endroit où circule le véhicule. On entend par « axe longitudinal » une droite sensiblement parallèle aux côtés latéraux, côtés comprenant les portières, de la voiture et sensiblement parallèle au plan horizontal. On entend par « axe latéral » ou « axe transversal » une droite perpendiculaire à l'axe longitudinal telle que le plan formé par les axes longitudinale et latérale soit parallèle au plan horizontal. Une distance longitudinale est une distance mesurée selon un axe parallèle à l'axe longitudinale. Une distance latérale est une distance mesurée selon un axe parallèle à l'axe latérale. Les mots « avant », « aval », arrière », « amont » s'entendent selon l'axe longitudinal selon le sens d'avancement normal du véhicule.

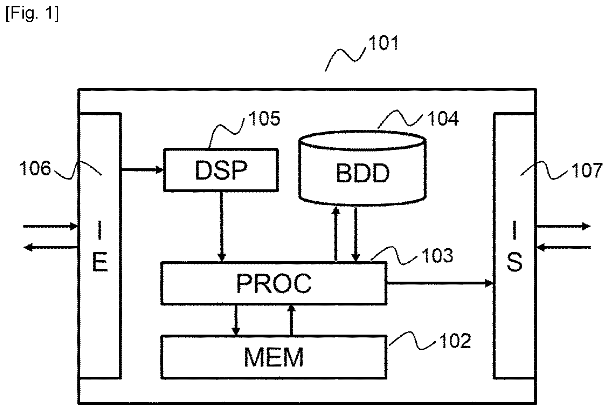

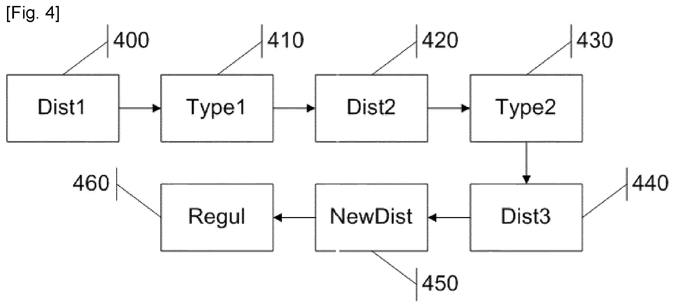

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 4. Dans un mode de réalisation, il correspond à un calculateur de conduite autonome.

Dans la présente description, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-après. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

Par exemple, l'interface d'entrée 106 peut réceptionner les données suivantes : position ou localisation géographique du véhicule, vitesse et/ou accélération du véhicule, positions/vitesses/accélérations consignes ou prédéterminées, régime moteur, position et/ou course de la pédale d'embrayage, de frein et/ou d'accélération, détection d'autres véhicules ou objets, position ou localisation géographique des autres véhicules ou objets détectés, vitesse et/ou accélération des autres véhicules ou objets détectés, états de fonctionnement de capteurs, indice de confiance de données issues ou traitées par des capteurs et/ou dispositifs similaires au dispositif 101. Par exemple, les capteurs aptes à fournir des données sont : GPS associé ou non à une cartographie, tachymètres, accéléromètres, RADAR, LIDAR, lasers, ultra-sons, caméra ...

Dans la présente invention, l'interface d'entrée 106 peut également réceptionner des données issues d'une cartographie simple définition et d'un système de géolocalisation comme une distance d'un début de rond-point par rapport au véhicule, un type de signalisation routière, une distance d'une signalisation routière par rapport au véhicule. L'interface d'entrée 106 peut également réceptionner des données issues d'une caméra embarquée sur ledit véhicule comme un type de signalisation routière, une distance d'un début de rond-point par rapport au véhicule.

Par exemple, l'interface de sortie 107 peut transmettre des données similaires aux données réceptionnées par l'interface d'entrée 106. Dans la présente invention, l'interface de sortie 107 peut également transmettre une nouvelle distance d'un début de rond-point par rapport au véhicule, une consigne à un régulateur de régulation de vitesse de prendre en compte la nouvelle distance.

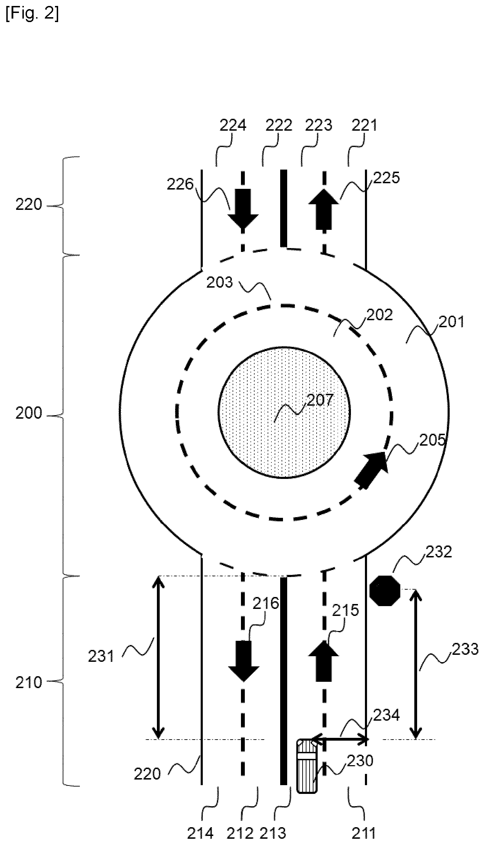

[Fig. 2] illustre schématiquement un véhicule 230 arrivant sur un rond-point 200 selon une vue réelle. Le rond-point 200 comporte un terre-plein central 207 et deux voies de circulation 201, 202. Les deux voies de circulations 201, 202 sont séparées par un marquage au sol 203. Le marquage au sol 203 est situé au centre des voies de circulation du rond-point 200. La flèche 205 indique un sens de circulation.

Une première route 210 permet d'entrer et de sortir du rond-point 200. La première route 210 comporte 4 voies 211, 212, 213 et 214. Les flèches 215 et 216 indiquent un sens de circulation. Les deux voies 211, 213 sont séparées par un marquage au sol et permettent à un véhicule d'entrer dans le rond-point 200. Les deux voies 212, 214 sont séparées par un marquage au sol et permettent à un véhicule de sortir du rond-point 200.

Une deuxième route 220 permet également d'entrer et de sortir du rond-point 200. La deuxième route 220 comporte 4 voies 221, 222, 223 et 224. Les flèches 225 et 226 indiquent un sens de circulation. Les deux voies 221, 223 sont séparées par un marquage au sol et permettent à un véhicule de sortir du le rond-point 200. Les deux voies 212, 214 sont séparées par un marquage au sol et permettent à un véhicule d'entrer du rond-point 200.

Le véhicule 230 circule sur la première route 210 sur la voie 213 selon le sens de circulation indiquée par la flèche 215. Une double flèche 231 indique une distance, distance longitudinale, entre le véhicule 230, plus précisément une origine d'un repère lié au véhicule, et un début du rond-point 200. En entrée et en amont du rond-point 200, se trouve une signalisation routière 232. La signalisation routière 232 se situe, généralement en bord de route, entre le véhicule 230 et l'entrée du rond-point. Une double flèche 233 indique une distance longitudinale entre le véhicule 230 et la signalisation routière 232.

L'origine du véhicule 230 est un point lié au véhicule. C'est par exemple, le centre de gravité, le milieu de l'essieu avant, le milieu du parechoc- avant, ...

Une double flèche 234 indique une distance latérale entre le véhicule 230 et une origine liée à la route 210. Cette origine peut être un bord de la route. Dans l'exemple de la figure 2, cette origine correspond à la plus courte distance entre l'origine du véhicule et un bord droit de la route 210 sur laquelle circule le véhicule.

Les distances 233 et 234 indiquent une position du véhicule par rapport à une signalisation routière. L'entrée du rond-point est définie par rapport à l'intersection entre une voie d'une route d'entrée du rond-point avec la voie 201, voie extérieure du rond-point. La signalisation routière est dans un environnement proche du rond-point. Cet environnement proche est généralement d'une dizaine de centimètres avant l'entrée du rond-point.

La signalisation routière 231 est une signalisation routière dont le type est relatif à une intersection ou à une route prioritaire. Cela peut-être un panneau ou un feu de signalisation. Le type de panneau doit être relatif une intersection ou à une route prioritaire. Par exemple, le type de panneau est un panneau stop, un panneau céder le passage, ou un autre panneau d'intersection ou de priorité.

Avantageusement, un panneau d'intersection ou de priorité est également un panneau de signalisation de position. Un panneau de signalisation de position, panneau de position, se distingue d'un panneau de signalisation avancée. Un panneau de signalisation avancée indique à l'avance une signalisation. La distance « à l'avance » est approximative et peut être erronée de l'ordre de 25 m.

Le type de feu de signalisation doit être relatif une intersection ou à une route prioritaire. Par exemple, le type de feu de signalisation est un feu tricolore, ou un autre feu d'intersection.

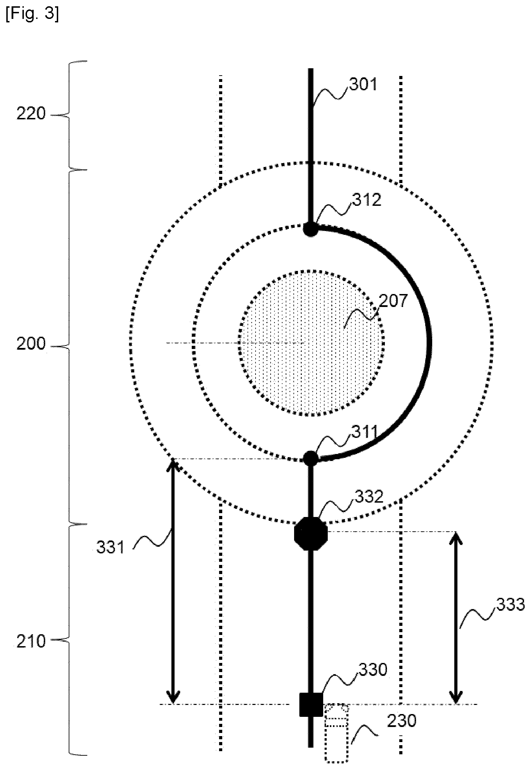

[Fig. 3] illustre schématiquement le véhicule 230, 330 arrivant sur le rond-point 200 selon les données issues d'une cartographie simple définition et d'un système de géolocalisation. Un bord extérieur du rond-point 200, le terre-plein central 207, la première route 210 et la deuxième route 220, et le véhicule 230 de la figure 2 sont représentés en pointillées. Les représentations en pointillées ne sont pas connues d'une carte simple définition.

Les données issues d'une cartographie simple définition et d'un système de géolocalisation permette de placer le véhicule 230 sur une ligne 301, ligne dessinée noire et épaisse, ligne correspondant à une trajectoire future probable du véhicule et correspondant à une trajectoire passée selon une durée prédéterminée. La position du véhicule est ici représentée par le carré 330.

Le point 311 représente la position, distance longitudinale sur la ligne 301 donc également distance par rapport au véhicule 330, selon la cartographie, du début du rond-point. Le point 312 représente la position, distance longitudinale sur la ligne 301 donc également distance par rapport au véhicule 330, selon la cartographie, d'une fin du rond-point. Classiquement, la ligne 301 dans le rond-point correspond au milieu de la largeur de l'ensemble des voies du rond-point.

Une double flèche 331 indique une distance entre le véhicule 330 et le début du rond-point 311 fourni par les données issues d'une cartographie simple définition et d'un système de géolocalisation.

Une signalisation routière 332 représente la signalisation routière 232 sur la ligne 301. Une double flèche 333 indique une distance entre le véhicule 330 et la signalisation routière 332.

La figure 2 et la figure 3 permettent d'illustrer l'erreur de positionnement d'un début de rond-point par données issues d'une cartographie simple définition et d'un système de géolocalisation et comparaison par rapport au « réel ».

[Fig. 4] illustre schématiquement un procédé de contrôle d'une régulation de vitesse d'un véhicule autonome, selon un exemple particulier de réalisation de la présente invention. Le procédé gère une accélération dudit véhicule 230 arrivant sur le rond-point 200. Le procédé est mis en œuvre par un processeur 103. Le procédé comprend plusieurs étapes.

L'étape 400, Dist1, est une étape de détermination, à partir de données issues d'une cartographie simple définition et d'un système de géolocalisation, d'une première distance, par rapport audit véhicule, d'un début dudit rond-point. Dans le monde « réel », la première distance est la référence 231 de la figue 2. Selon les données, la première distance est la référence 331 de la figure 3.

Il est connu qu'un traitement de données à partir d'une cartographie simple définition associé à un système de géolocalisation permet de fournir, par rapport au véhicule et sur des trajectoires futures possibles du véhicule, un type de route, rond-point par exemple, la présence d'une signalisation routière et de son type, ... Ces informations sont données par rapport à une distance du véhicule.

Par exemple, le véhicule circule sur une route de type route nationale et se dirige en direction d'un rond-point dont le début est situé à 1000 m du véhicule. Un panneau avancé « cédez le passage » est à 325 m du début du rond-point, ce panneau indiquant par écrit, sur un panonceau, que le rond-point est à 300 m. Un panneau de position « cédez le passage » est à 0,20 m du début du rond-point. Dans cet exemple, les données issues d'une cartographie simple définition et d'un système de géolocalisation peuvent fournir :
- un nouveau type de route à 1005 m, ce qui détermine le début de rond-point à 1005 m ;
- un premier premier type d'une signalisation routière étant un panneau « cédez le passage » à une première deuxième distance de 675 m du véhicule, la signalisation routière correspondant au panneau avancé ;
- un deuxième premier type d'une signalisation routière étant un panneau « cédez le passage » à une deuxième deuxième distance de 999 m du véhicule, la signalisation routière correspondant à un panneau de position.
Les données peuvent également fournir un type et une distance de signalisation routière non relatif à une intersection ou à une route prioritaire comme une vitesse limite, ou autre.

L'étape 410, Type1, est une étape de détermination, à partir de données issues d'une cartographie simple définition et d'un système de géolocalisation, d'un premier type d'une première signalisation routière.

Dans l'exemple ci-dessus, ledit premier type peut être le premier premier type et/ou le deuxième premier type.

L'étape 420, Dist2, est une étape de détermination, à partir de données issues d'une cartographie simple définition et d'un système de géolocalisation, d'une deuxième distance, par rapport audit véhicule, de ladite première signalisation routière lorsque ledit premier type est relatif à une intersection ou à une route prioritaire.

Ainsi, si ledit premier type n'est pas relatif à une intersection ou à une route prioritaire, il n'y a pas de détermination de la deuxième distance. Cela permet de filtrer, de ne pas prendre en compte pour un gain charge de calcul, une signalisation routière non relative à une intersection ou à une route prioritaire.

Dans l'exemple ci-dessus, ladite deuxième distance peut être la première deuxième distance et/ou la deuxième deuxième distance.

Dans un mode opératoire, une étape 450, NewDist, est une étape de détermination d'une nouvelle distance de début dudit rond-point fondée sur ladite première distance, sur ledit premier type et sur ladite deuxième distance.

On peut créer différentes méthodes pour cette détermination de nouvelle distance. Dans un mode opératoire, très simplement, ladite nouvelle distance est égale à la deuxième distance. Dans un autre mode opératoire, on prendra en compte l'écart entre la première distance et la deuxième distance pour déterminer la nouvelle distance. Également, par exemple, en se basant sur le premier type, une nouvelle distance n'est calculée que pour certains types de signalisation routière. Cela permet d'exclure, par exemple, les panneaux avancés. Cela peut également moduler la détermination de la nouvelle distance en fonction d'un type panneau ou d'un type feu. En effet, un panneau de position est généralement placé juste au début du rond-point, alors qu'un feu est généralement placé à 1 ou 2 mètres du début du rond-point pour, par exemple, laisser la place à un passage piéton.

Dans l'exemple ci-dessus, par exemple, on ne prend pas en compte la première deuxième distance car le premier premiere type de signalisation correspond à un panneau avancé. Cependant, le deuxième premier type, panneau de position « cédez le passage » étant relatif à une intersection ou à une route prioritaire et étant de position, la nouvelle distance peut être égale à la deuxième deuxième distance soit 999 m, si l'écart entre la première distance et la deuxième deuxième distance est faible (de l'ordre de 5 m, mais des autres valeurs sont possibles).

L'étape 430, Type2, est une étape de détermination, à partir de données issues d'une caméra embarquée sur ledit véhicule, d'un deuxième type d'une deuxième signalisation routière.

L'étape 440, Dist3, est une étape de détermination, à partir de données issues d'une caméra embarquée sur ledit véhicule, d'une troisième distance, par rapport audit véhicule, de ladite deuxième signalisation routière lorsque ledit deuxième type est relatif à une intersection ou à une route prioritaire.

Il est connu qu'une caméra embarquée sur le véhicule, par un traitement d'image adapté, est apte à identifier et caractériser des objets situés dans le champ de vision de la caméra. Par exemple, les données peuvent contenir la présence d'une signalisation routière, de son type et de sa distance par rapport au véhicule.

Il est également connu qu'une caméra embarquée ne peut donner des données fiables et précise que pour des objets détectés dans les 200 mètres environ. Cette distance de 200 mètres dépend des caractéristiques de la caméra (résolution, ...) et du traitement d'images. D'autres valeurs sont possibles.

Dans l'exemple ci-dessus, on supposera que la véhicule est maintenant à environ 150 mètres du début du rond-point. Les données issues d'une cartographie simple définition et d'un système de géolocalisation et les données issues d'une caméra embarquée sur ledit véhicule peuvent fournir :
- un nouveau type de route à 155 m, ce qui détermine le début de rond-point à 155 m ;
- un premier type d'une signalisation routière étant un panneau « cédez le passage » à une deuxième distance de 149 m du véhicule, la signalisation routière correspondant à un panneau de position ; et
- un deuxième type d'une signalisation routière étant un panneau « cédez le passage » à une troisième distance de 150 m du véhicule, la signalisation routière correspondant à un panneau de position.

L'étape 450, New Dist est une étape de détermination d'une nouvelle distance de début dudit rond-point fondée sur ladite première distance, sur ledit premier type et sur ladite deuxième distance. Ci-dessus, un exemple, en absence de données issues d'une caméra, a été décrit.

Avantageusement, la détermination de ladite nouvelle distance de début dudit rond-point est, en outre, fondée sur ledit deuxième type et sur ladite troisième distance. Ainsi, on prend en plus les données issues de la caméra. Pour déterminer la nouvelle distance, on prendra en compte la première distance, premier type, la deuxième distance, le deuxième type et la troisième distance.

Par exemple, les types peuvent être utilisés pour ne pas prendre en compte la deuxième distance ou la troisième distance. Également, si le premier type et le deuxième type sont différents, on pourra privilégier la deuxième distance ou la troisième distance en fonction de la confiance qu'on a sur les mesures issues de la caméra. On privilégiera la troisième distance, si les mesures issues de la caméra sont constantes sur plusieurs mètres, car les données d'une cartographie simple définition peuvent ne plus être à jour. Différentes possibilités sont possibles pour déterminer cette nouvelle distance. Un exemple est de prendre comme nouvelle distance la distance égale à la troisième distance. Un autre exemple est de prendre comme nouvelle distance la moyenne entre la deuxième et la troisième distance, si l'écart entre la première distance et la deuxième distance est inférieur à un seuil prédéterminé et si l'écart entre la première distance et la troisième distance est inférieur au même seuil prédéterminé ou à un autre seuil prédéterminé.

L'étape 460, Regul, est une étape de régulation de la vitesse du véhicule à partir de ladite nouvelle distance de début de rond-point. Assez simplement, on contrôle le régulateur de vitesse en fournissant, en entrée du régulateur de vitesse, la nouvelle distance. Comme cette distance est plus fiable que la position du début du rond-point données par la cartographie, le régulateur a moins besoin de faire de corrections une fois au niveau du début du rond-point. La conduite du véhicule est plus souple et agréable pour les occupants du véhicule.

La présente invention ne se limite pas aux formes de réalisation décrites ci-avant à titre d'exemples : elle s'étend à d'autres variantes. Par exemple, le procédé a été décrit selon un enchaînement d'étapes. Certaines étapes peuvent être réalisées en parallèle ou selon un autre enchaînement. Également, certaines étapes peuvent être réalisés par itérations pour chaque signalisation routière présente dans la cartographie avant le début du rond-point et/ou pour chaque signalisation routière détectée par la caméra avant le début du rond-point.

Avantageusement, lorsque données issues d'une cartographie simple définition et d'un système de géolocalisation fournissent un type et une distance de plusieurs premières signalisation routière, est pris en compte la signalisation routière, dont le type est relatif à une intersection ou à une route prioritaire, ayant la distance la plus faible par rapport audit véhicule. Cela évite des itérations et réduit la charge de calcul.

Avantageusement, lorsque données issues d'une caméra embarquée sur ledit véhicule fournissent un type et une distance de plusieurs deuxièmes signalisations routières, est pris en compte la signalisation routière, dont le type est relatif à une intersection ou à une route prioritaire, ayant la distance la plus faible par rapport audit véhicule. Cela évite également des itérations et réduit la charge de calcul.

## Revendications

1. Procédé de contrôle d'une régulation de vitesse d'un véhicule autonome pour gérer une accélération dudit véhicule arrivant sur un rond-point, ledit procédé étant mis en œuvre par un processeur (103) et comprenant les étapes de :
• Détermination, à partir de données issues d'une cartographie simple définition et d'un système de géolocalisation, d'une première distance (400), par rapport audit véhicule, d'un début dudit rond-point, d'un premier type (410) d'une première signalisation routière, et d'une deuxième distance (420), par rapport audit véhicule, de ladite première signalisation routière lorsque ledit premier type est relatif à une intersection ou à une route prioritaire ;
• Détermination d'une nouvelle distance (450) de début dudit rond-point fondée sur ladite première distance, sur ledit premier type et sur ladite deuxième distance ;
• Régulation (460) de la vitesse du véhicule à partir de ladite nouvelle distance de début de rond-point.

2. Procédé selon la revendication précédente, dans lequel le procédé comporte en outre une étape de détermination (430), à partir de données issues d'une caméra embarquée sur ledit véhicule, d'un deuxième type d'une deuxième signalisation routière, une étape de détermination (440), à partir de données issues d'une caméra embarquée sur ledit véhicule, d'une troisième distance, par rapport audit véhicule, de ladite deuxième signalisation routière lorsque ledit deuxième type est relatif à une intersection ou à une route prioritaire, et dans lequel la détermination de ladite nouvelle distance (450) de début dudit rond-point est, en outre, fondée sur ledit deuxième type et sur ladite troisième distance.

3. Procédé selon l'une des revendications précédentes, dans lequel une signalisation routière dont le type est relatif à une intersection ou route prioritaire est un panneau stop, un panneau cédez le passage, ou un autre panneau d'intersection ou de priorité, ou dans lequel une signalisation routière dont le type est relatif à une intersection ou route prioritaire est un feu tricolore ou un autre feu d'intersection.

4. Procédé selon la revendication précédente, dans lequel un panneau d'intersection ou de priorité est également un panneau de signalisation de position.

5. Procédé selon l'une des revendications précédentes, dans lequel, lorsque données issues d'une cartographie simple définition et d'un système de géolocalisation fournissent un type et une distance de plusieurs premières signalisations routières, est pris en compte la signalisation routière, dont le type est relatif à une intersection ou à une route prioritaire, ayant la distance la plus faible par rapport audit véhicule.

6. Procédé selon l'une des revendications précédentes, dans lequel, lorsque données issues d'une caméra embarquée sur ledit véhicule fournissent un type et une distance de plusieurs deuxièmes signalisations routières, est pris en compte la signalisation routière, dont le type est relatif à une intersection ou à une route prioritaire, ayant la distance la plus faible par rapport audit véhicule.

7. Dispositif (101) comprenant une cartographie simple définition, un système de géolocalisation, une caméra, une mémoire (102) associée à au moins un processeur (103) configuré pour mettre en œuvre le procédé selon l'une des revendications précédentes.

8. Véhicule comportant le dispositif selon la revendication précédente.

9. Programme d'ordinateur comprenant des instructions qui, lorsque le programme est exécuté par le dispositif (101) selon la revendication 7, conduisent celui-ci à mettre en œuvre le procédé selon l'une des revendication 1 à 6.

## Patentansprüche

1. Verfahren zur Steuerung einer Geschwindigkeitsregelung eines autonomen Fahrzeugs zur Steuerung einer Beschleunigung des Fahrzeugs, das einen Kreisverkehr erreicht, wobei das Verfahren durch einen Prozessor (103) implementiert wird und die Schritte umfasst:
• Bestimmung einer ersten Entfernung (400) vom Fahrzeug, eines Beginns des Kreisverkehrs, einer ersten Art (410) einer ersten Straßenverkehrszeichen und einer zweiten Entfernung (420) von der ersten Straßenverkehrszeichen vom Fahrzeug, wenn die erste Art eine Kreuzung oder eine vorfahrtsberechtigte Straße betrifft;
• Bestimmung eines neuen Anfangsabstands (450) des Kreisverkehrs auf der Grundlage des ersten Abstands, des ersten Typs und des zweiten Abstands;
• Regelung (460) der Fahrzeuggeschwindigkeit aus dem neuen Kreisverkehr-Anfangsabstand.

2. Verfahren nach dem vorhergehenden Anspruch, bei dem das Verfahren ferner einen Schritt des Bestimmens (430) eines zweiten Typs eines zweiten Straßenverkehrszeichens aus Daten von einer an dem Fahrzeug befindlichen Kamera, einen Schritt des Bestimmens (440) eines dritten Abstands des zweiten Straßenverkehrszeichens von dem Fahrzeug aus Daten von einer an dem Fahrzeug befindlichen Kamera umfasst, wenn der zweite Typ sich auf eine Kreuzung oder eine Vorfahrtstraße bezieht, und bei dem das Bestimmen des neuen Anfangsabstands (450) des Kreisverkehrs ferner auf dem zweiten basiert Typ und auf dieser dritten Strecke.

3. Verfahren nach einem der vorhergehenden Ansprüche, bei dem eine Verkehrszeichen, deren Typ sich auf eine vorfahrtsberechtigte Kreuzung oder Straße bezieht, ein Stoppschild, ein Vorfahrtsschild oder ein anderes Kreuzungs- oder Vorfahrtsschild ist, oder bei dem eine Verkehrszeichen, deren Typ sich auf eine vorfahrtsberechtigte Kreuzung oder Straße bezieht, ein dreifarbiges oder ein anderes Kreuzungslicht ist.

4. Verfahren nach dem vorhergehenden Anspruch, bei dem ein Schnittpunkt- oder Prioritätstafel auch ein Positionsanzeigetafel ist.

5. Verfahren nach einem der vorhergehenden Ansprüche, bei dem dann, wenn die Daten aus einer einfachen Kartographie und einem Ortungssystem einen Typ und eine Distanz mehrerer erster Straßensignalisationen liefern, die Straßensignalisierung berücksichtigt wird, deren Typ sich auf eine Kreuzung oder eine vorrangige Straße bezieht, die den geringsten Abstand von dem Fahrzeug hat.

6. Verfahren nach einem der vorhergehenden Ansprüche, bei dem dann, wenn Daten von einer Kamera an Bord des Fahrzeugs einen Typ und einen Abstand von mehreren zweiten Straßensignalisationen liefern, die Straßensignalisierung berücksichtigt wird, deren Typ sich auf eine Kreuzung oder eine Vorfahrtsstraße bezieht, die den geringsten Abstand von dem Fahrzeug hat.

7. Vorrichtung (101), die eine einfache Auflistung, ein Ortungssystem, eine Kamera und einen Speicher (102) umfasst, die mindestens einem Prozessor (103) zugeordnet sind, der zur Durchführung des Verfahrens nach einem der vorhergehenden Ansprüche konfiguriert ist.

8. Fahrzeug mit der Vorrichtung nach dem vorhergehenden Anspruch.

9. Computerprogramm, das Befehle umfasst, die, wenn das Programm von der Vorrichtung (101) nach Anspruch 7 ausgeführt wird, diese veranlassen, das Verfahren nach einem der Ansprüche 1 bis 6 auszuführen.

## Claims

1. Method of controlling a speed regulation of an autonomous vehicle to manage an acceleration of said vehicle arriving at a roundabout, said method being implemented by a processor (103) and comprising the steps of:
• determining, from data derived from a single definition mapping and a geolocation system, a first distance (400), by report to said vehicle, a beginning of said roundabout, a first type (410) of a first road sign, and a second distance (420), by report to said vehicle, of said first road sign when said first type relates to an intersection or a priority route;
• determining a new beginning distance (450) of said roundabout based on said first distance, on said first type and on said second distance;
• regulating (460) the vehicle speed from said new roundabout beginning distance.

2. Method according to claim 1, wherein the method further comprises a step of determining (430), from data from a camera on board said previous vehicle, a second type of a second road sign, a step of determining (440), from data from a camera on board said vehicle, a third distance, by report to said vehicle, of said second road sign when said second type relates to an intersection or to a priority route, and wherein the determination of said new beginning distance (450) of said roundabout is, in addition, based on said second type and on said third distance.

3. Method as claimed in claim 1, wherein a road sign whose type relates to an intersection or priority sign is a stop sign, a stop sign, or another intersection or priority, or wherein a road sign whose type relates to an intersection or priority road is a traffic light or another intersection light.

4. Method according to claim previous, wherein an intersection or priority sign is also a position signalling panel.

5. Method as claimed in claim 1, wherein, when data from a previous mapping and a geolocation system provide a type and a distance of several first road signs, the road sign, the type of which relates to an intersection or to a priority route, having the smallest distance by report to said vehicle, is taken into account.

6. Method as claimed in claim 1, wherein, when data from a camera on board said previous vehicle provides a type and a distance of several second road signs, the road sign, the type of which relates to an intersection or to a priority route, having the smallest distance by report to said vehicle, is taken into account.

7. Device (101) comprising a single definition mapping, a geolocation system, a camera, a memory (102) associated with at least one processor (103) configured to implement the method according to one of the previous claims.

8. Vehicle comprising the device according to the previous claim.

9. Computer plan comprising instructions which, when the plan is executed by the device (101) according to claim 7, lead the latter to implement the method according to one of claims 1 to 6.
